# EUROPÄISCHE PATENTSCHRIFT

(11) **EP 2 701 531 B1**
(45) Veröffentlichungstag und Bekanntmachung des Hinweises auf die Patenterteilung: **10.06.2015**
(21) Anmeldenummer: 12717746.7
(22) Anmeldetag: 30.04.2012
(51) Int. Cl.: A23G 1/04

(54) **RÜHRWERKSMÜHLE**
STIRRING MILL
BROYEUR AGITATEUR

(30) Priorität: 28.04.2011 EP 11164098
(43) Veröffentlichungstag der Anmeldung: 05.03.2014
(73) Patentinhaber: Bühler AG, 9240 Uzwil (CH)
(72) Erfinder: BRAUN, Peter, CH-8280 Kreuzlingen (CH); BEHRENS, Raimund, 78462 Konstanz (DE); NESIMI, Skeljzen, CH-8590 Romanshorn (CH); CHIALINA, Marco, CH-9240 Uzwil (CH)
(74) Vertreter: Hepp Wenger Ryffel AG
(86) Internationale Anmeldenummer: PCT/EP2012/057926
(87) Internationale Veröffentlichungsnummer: WO 2012/146784

(56) Entgegenhaltungen:
- EP-A1- 0 294 876
- EP-A1- 0 529 434
- WO-A1-2008/097427
- DE-A1- 2 629 251
- DE-B- 1 234 500
- DE-C2- 3 249 928
- GB-A- 1 357 251
- US-A- 4 850 541

## Beschreibung

Die Erfindung betrifft eine Rührwerksmühle, insbesondere eine Rührwerkskugelmühle, für den Lebensmittelbereich, insbesondere für die Schokoladenherstellung.

Bekannt sind Rührwerksmühlen, die aus einem Behälter mit einem Stator, einem Rotor mit daran befestigten Rührwerkzeugen und Kugeln bestehen. Solche Mühlen werden in der Industrie weit verbreitet eingesetzt. Nachteilig sind häufig die schlechte Vermischung, da nicht der komplette Produktfluss in direktem Kontakt mit den Rührwerkzeugen kommt, und eine schlechte Reinigungsmöglichkeit.

Aus der EP 0 294 876 B1 ist ein Gerät zur Verfeinerung von Schokolade bekannt, bei dem Scherkräfte durch auf einem Rotor angeordnete Stifte und auf einem Stator angeordnete Scheiben auf die zu verfeinernde Masse aufgebracht werden. Eine solche Vorrichtung ist nur für sehr feines Material zu verwenden, da ausschliesslich die Scherkraft der Masse wirkt und keine Mahlwirkung entstehen kann. Zum Vermahlen von Kakaomasse ist die Vorrichtung nicht geeignet. Des Weiteren ist die Reinigung aufgrund der komplexen Bauweise schwierig und langwierig.

Aus der DE 1 234 500 ist eine Rührwerksmühle für Farbpigmente bekannt, die Rührscheiben am Rotor und Ringscheiben am Stator umfasst. Als Mahlkörper ist Sand in der Mühle enthalten. Die Durchmischung in einer solchen Anordnung ist nicht optimal, da sich zu mahlendes, insbesondere sehr feines Gut auf den statischen Scheiben festsetzen kann. Eine solche Anordnung ist für Lebensmittel einerseits aus hygienischen Gründen und andererseits aus betriebsökonomischen Gründen nicht verwendbar. Des Weiteren lässt sich abhängig von der Viskosität der Dispersion der Sand nicht mehr leicht von der Dispersion trennen.

Die AT 268840 offenbart eine Rührwerksmühle, in der zur Trennung von Mahlgut und Mahlkörpern schmale Spalte zwischen Scheiben am Rotor und Scheiben am Stator angeordnet sind. Diese Spalte müssen demzufolge kleiner sein als der kleinste Mahlkörper. Mit einem solchen Aufbau wird die Leistung der Mühle sehr gering, da nur wenig Mahlgut durch die Spalte hindurch gelangen kann.

In der Regel hat der Stator eine Einfluss- sowie ein Ausflussöffnung. Eine Pumpe pumpt das insbesondere fluide Mahl- und Mischgut von der Einflussöffnung zur Ausflussöffnung, so dass ein Produktfluss von der Einfluss- zur Ausflussöffnung entsteht.

Aus der Druckschrift WO 2008/097427 ist eine Kugelmühle mit stift- und scheibenförmigen Elementen auf der drehbar gelagerten Welle bekannt.

Die Druckschrift GB 1 357 251 offenbart eine Rührwerkskugelmühle, bei der Eisenkugeln dafür benutzt werden, Eisenoxide, Ferrite oder Porzellankugeln zu pulverisieren, wobei Paddel oder Flügel auf einer Welle angebracht sind.

Die Druckschrift US 4,850,541 zeigt eine Kugelmühle mit einem Spiralblatt und stiftartigen Elementen auf einer Welle.

Aus der Druckschrift DE 26 29 251 ist eine Rührwerksmühle mit einer Rührwerkswelle bekannt, auf der konzentrisch radial abstehende, Hohlscheiben angebracht sind. Am Aussenring jeder Scheibe sind radial abstehend mehrere Rührstäbe befestigt. An dem Innenzylinder sind radial in den Mahlraum hineinragende Gegenstäbe angebracht.

Die Druckschrift DE 32 49 928 zeigt eine Rührwerkskugelmühle, bei der ein Rührwerksrotor in einem Mahlgutbehälter um eine Vertikalachse drehbar gelagert ist. Die Mühle weist Statorscheiben und Rotorscheiben auf, die jeweils als einstückige Halbkreisringe in den Mahlbehälter eingesetzt bzw. an den Rührwerksrotor angesetzt sind.

Die Druckschrift DE 1 234 500 offenbart eine Rührwerkskugelmühle mit einer Welle, auf der konzentrisch Rührscheiben angeordnet sind und einem Mahlbehälter, aus dessen Innenwand Ringscheiben herausragen.

Aufgabe der vorliegenden Erfindung ist, die Nachteile des Standes der Technik zu vermeiden und insbesondere eine Rührwerksmühle sowie ein Verfahren vorzustellen, mit dem fluides Mahlgut vermahlen werden kann. Die Aufgabe wird durch die Merkmale des Anspruchs 1 gelöst. Die abhängigen Ansprüche bezeichnen bevorzugte bzw. alternative Ausführungsformen.

Eine erfindungsgemässe Rührwerksmühle für den Lebensmittelbereich umfasst einen im Wesentlichen zylindrischen oder konischen Behälter mit einer Behälterinnenwand und einen drehbar gelagerten Rührkörper. Der Rührkörper umfasst eine Welle, die ihrerseits insbesondere im Wesentlichen radial von der Welle wegweisende Rührwerkzeuge aufweist. Die Rührwerkzeuge am Rührkörper sind insbesondere stiftförmig ausgestaltet. An der Behälterinnenwand ist bevorzugt konzentrisch zu der Welle des Rührkörpers mindestens ein statisches Mahlblatt angeordnet. Hierbei kann an der Behälterinnenwand auch bedeuten, dass ein statisches Mahlblatt an einer weiteren Befestigungsvorrichtung im Wesentlichen an der Behälterinnenwand angeordnet ist. Neben den stiftförmigen Rührwerkzeugen an der Welle ist weiterhin mindestens ein scheiben- oder teilscheibenförmiges Rührwerkzeug ausgebildet.

Bevorzugt sind die stiftförmigen Rührwerkzeuge und das mindestens eine scheiben- oder teilscheibenförmiges Rührwerkzeug auf einem Abschnitt der Welle angeordnet, der sich innerhalb eines definierten Behälterbereichs befindet.

Ein definierter Bereich eines zylindrischen Behälters weist insbesondere einen konstanten Durchmesser, der definierte Bereich eines konischen Behälters insbesondere einen konstanten Konuswinkel auf.

Bevorzugt erstreckt sich innerhalb des definierten Bereichs die Verteilung der stiftförmigen Rührwerkzeuge in axialer Richtung über eine Strecke, innerhalb derer sich die axiale Position des mindestens eine scheiben- oder teilscheibenförmiges Rührwerkzeug befindet, oder die mit einer Strecke überlappt, über die sich mehrere scheiben- oder teilscheibenförmiger Rührwerkzeuge in axialer Richtung verteilen.

Bevorzugt befindet sich das mindestens eine statische Mahlblatt in demselben definierten Behälterbereich.

Das scheiben- oder teilscheibenförmige Rührwerkzeug übernimmt während des Mahlprozesses eine Produktführungsfunktion. Der Produktfluss entlang der Behälterinnenwand sowie direkt entlang der Wellenachse wird verhindert, so dass das zu vermahlende Produkt gegen die Rührwerkzeuge gelenkt wird.

Die Rührwerkzeuge und das mindestens eine statische Mahlblatt sind derart angeordnet, dass sie in einer Projektion entlang der Wellenachse radial beabstandet sind.

Das statische Mahlblatt definiert mit seiner radialen Ausdehnung einen freien Innendurchmesser des Behälters. Die radiale Ausdehnung der Welle mit den Rührwerkzeugen, also der maximale Aussendurchmesser des Rührkörpers ist kleiner als der freie Innendurchmesser des Behälters.

Eine solche Ausgestaltung hat insbesondere den Vorteil, dass der gesamte Rührkörper leicht aus dem Behälter entfernt werden kann und so Reinigungsarbeiten oder Wartungsarbeiten erleichtert werden.

Der Rührkörper, also die Welle mit den Rührwerkzeugen, kann in axialre Richtung einfach aus dem Behälter herausgezogen werden, ohne dass die Werkzeuge abmontiert werden müssen. Der Behälter kann als geschlossener zylindrischer oder konischer Behälter ausgeführt sein, der nur von einer Stirnseite aus zugänglich sein muss.

Des Weiteren können innerhalb des Behälters Mahlkörper, insbesondere Kugeln, vorgesehen sein, zumindest im Betriebszustand.

Mahlkörper erhöhen die Scherbeanspruchung auf das zu vermahlende Gut und verbessern die Mahlleistung.

Das mindestens eine statische Mahlblatt ist mindestens im Wesentlichen axial von den scheibenförmigen Rührwerkzeugen beabstandet. Dieser axiale Abstand ist grösser als der grösste Durchmesser der Mahlkörper, so dass eine Bewegung der Mahlkörper zwischen den statischen Mahlblättern und den scheiben- oder teilscheibenförmigen Rührwerkzeugen möglich ist. Mindestens im Wesentlichen ist so zu verstehen, dass Segmente mit fehlender Überlappung möglich sind, insbesondere bei einer schrauben- oder spiralförmigen Ausgestaltung der Rührwerkzeuge und/oder des mindestens einen statischen Mahlblatts. Die Segmente mit axialer Beabstandung sind zumindest grösser als die Segmente ohne axiale Beabstandung.

In dem Bereich der radialen und axialen Beabstandung zwischen Rührwerkzeugen und statischem Mahlblatt befinden sich Mahlkörper zwischen Rührwerkzeug und Mahlblatt und es entstehen Turbulenzen mit hohen Relativgeschwindigkeiten, die die Vermischung verbessern. Gleichzeitig wird die Reinigung der Rührwerkskugelmühle leicht möglich, da der Rührkörper axial aus der Mühle entfernt werden kann. Alternativ kann auch eine Öffnung in der Behälterwand vorgesehen sein, um den Rührkörper senkrecht zur Rührkörperachse aus dem Behälter zu entfernen.

Die im Behälter frei gelagerten Mahlkörper sind bevorzugt als Kugeln, insbesondere Stahlkugeln, ausgestaltet. Es sind auch Keramikkugeln oder Kugeln aus anderen Speziallegierungen möglich.

Eine kugelförmige Ausgestaltung bewirkt eine gleichförmige Beanspruchung der Mahlkörperoberfläche und hat daher einen gleichmässigen Verschleiss zur Folge. Auch die Materialwahl ist vorteilhaft verschleissresistent und insbesondere in der Lebensmittelindustrie detektierbar ausgestaltet.

Das mindestens eine statische Mahlblatt ist an der Behälterinnenwand konzentrisch zu der Welle des Rührkörpers angeordnet.

Bevorzugt ist das mindestens eine statische Mahlblatt eine Ring- oder Teilringscheibe. Das Mahlblatt erstreckt sich vorzugsweise über den ganzen Umfang. Insbesondere bevorzugt ist das mindestens eine statische Mahlblatt auf einer gewundenen verlaufenen Linie angeordnet. Diese Linie kann schraubenförmig oder spiralförmig verlaufen. Die Steigung der gewundenen Linie, auf der das mindestens eine Mahlblatt angeordnet ist, erzeugt eine Bewegung mit der Flussrichtung des Produktes.

Alternativ kann die Steigung der gewundenen Linie, auf der das mindestens eine Mahlblatt angeordnet ist, eine Bewegung entgegen der Flussrichtung des Produktes erzeugen.

Ebenfalls ist es möglich, dass die Rührwerkzeuge auf einer gewundenen Linie um die Welle angeordnet sind. Die Steigung des gewunden ausgebildeten Rührblatts kann entweder einen Förderfluss entgegen der Produktflussrichtung oder einen Förderfluss in Produktflussrichtung erzeugen. Dadurch erhöht bzw. verringert sich die Durchlaufzeit des Mahl- und Mischguts durch die Mühle und damit verringert bzw. erhöht sich auch die Mahlqualität. In diesem Zusammenhang wird unter Produktfluss die makroskopisch betrachtete Hauptflussrichtung des Mahl- und Mischguts von der Einlassöffnung zur Auslassöffnung verstanden, während unter Förderfluss lokale Flussrichtungen verstanden werden. Bevorzugt wird eine Produktflussrichtung des Mahl- und Mischguts entgegen der Schwerkraft. Denkbar wäre insbesondere bei einer horizontalen Anordnung der Längsachse des Behälters ein Produktfluss im Wesentlichen senkrecht zur Schwerkraft.

Insbesondere sind auf der Welle mehrere scheiben- oder teilscheibenförmige Rührwerkzeuge angeordnet, die bevorzugt alternierend angeordnet sind, so dass eine gleichmässige Verteilung von stift- und scheiben- oder teilscheibenförmige Rührwerkzeugen auf der Welle vorliegt.

Insbesondere sind innerhalb eines Behälterabschnitts mit konstantem Durchmesser oder konstantem Konuswinkel ausserdem mehrere statische Mahlblätter vorgesehen, die bevorzugt in axialer Richtung alternierend mit stift- und scheiben- oder teilscheibenförmige Rührwerkzeugen angeordnet sind.

Das Mahlgut wird auf seinem Weg durch die Mühle mehrfach gegen Rührwerkzeuge gelenkt.

Es ist auch denkbar, dass mindestens zwei Rührblätter mit verschiedenen Durchmessern an der Welle befestigt sind und/oder dass der Umfang des mindestens einen scheiben- oder teilscheibenförmigen Rührwerkzeugs eine von der Kreisform abweichende Form, wie beispielsweise elliptisch oder eckig aufweist. Dies provoziert die Bildung von Engspalten, wobei gleichzeitig ein Kugeldurchtritt ermöglicht wird. Eine gute Vermahlung wird erreicht und eine Kugelverpressung wird verhindert, so dass ein störungsfreier Mühlenbetrieb gewährleistet ist.

Der radiale Spalt zwischen den Rührwerkzeugen und den Mahlblättern entspricht bevorzugt 1-10 mal dem grössten Durchmesser der grössten Mahlkörper, insbesondere bevorzugt 6-mal dem grössten Durchmesser der grössten Mahlkörper. Zumindest ist der radiale Spalt, wie auch der axiale Spalt so gestaltet, dass die Mahlkörper durch den Spalt hindurch passen. Für die Anwendung in der Schokoladenherstellung beträgt der Durchmesser der Mahlkörper im Wesentlichen 2-12 mm, bevorzugt im Wesentlichen 4-9 mm, insbesondere bevorzugt im Wesentlichen 6 mm. In einer bevorzugten Ausführungsform sind die Mahlkörper in einem Behälter im Wesentlichen gleich gross. Denkbar wäre allerdings auch, unterschiedliche Mahlkörperdurchmesser zu verwenden. In Kombination mit einer unterschiedlichen Dichte des Mahlkörpermaterials, können so mehrere Mahlstufen in einem Behälter abgewickelt werden.

Diese Abmessungen von Spalten und Mahlkörpern ermöglichen eine optimale Vermahlung sowie Vermischung des Mahlguts.

Um die Reinigung weiter zu erleichtern ist es vorteilhaft, dass die Rührwerkzeuge auswechselbar an der Welle befestigt, insbesondere auf einer Manschette angeordnet sind.

Bevorzugt sind die Rührwerkzeuge an der Welle und/oder an der Manschette lösbar befestigt. Dies kann beispielsweise eine Steckverbindung oder Schraubverbindung sein. Denkbar ist eine an der Welle kraftschlüssig befestigte Lösung, die flexibel nach Notwendigkeit an der Welle befestigt werden kann. Je nach Verschleiss der Rührwerkzeuge, ist ein notwendiger, schneller Austausch durch eine lösbare Verbindung gewährleistet. Es kann auch eine unlösbare Befestigung sinnvoll sein, insbesondere aus Reinigungsgründen.

Die Mahlblätter sind in einer bevorzugten Ausführungsform lösbar an der Behälterinnenwand befestigt. Dies kann durch eine Schraubverbindung oder eine Steckverbindung an der Behälterinnenwand erreicht werden. Dies kann aus Verschleissgründen sinnvoll sein, oder auch bei Verwendung von unterschiedlichen Mahlblattformen und -dicken.

Alternativ ist es denkbar, dass die Mahlblätter unlösbar an der Behälterinnenwand befestigt sind. Dies ist aus Hygienegründen bevorzugt. Eine solche Verbindung kann beispielsweise eine Schweissverbindung oder eine Nietverbindung sein.

Bevorzugt ist der Behälter doppelwandig ausgestaltet. Eine doppelwandige Ausgestaltung ermöglicht einerseits die unabhängige Entschalung oder den Austausch des Innenbehälters, was einerseits aus Verschleissgründen und zur Verschleisskontrolle sinnvoll sein kann, andererseits aber auch zur Reinigung nützlich sein kann, da man zwei Innenbehälter verwenden kann und während des Betriebs des einen den anderen reinigen oder aufarbeiten kann. Eine unabhängige Entschalung bedeutet im Rahmen dieser Erfindung, dass der Innenbehälter lösbar und/oder entfernbar am Aussenmantel befestigbar, insbesondere verschraubbar oder klemmbar und/oder anflanschbar, ist. Ein doppelwandiger Behälter kann beispielsweise auch einen unlösbaren Innenbehälter aufweisen, der mit dem Aussenmantel verschweisst ist.

In einer bevorzugten Ausführungsform ist der Behälter temperierbar gestaltet. Dies erlaubt einerseits ein Kühlen bei zu hohen Temperaturen, die insbesondere durch die hohe Reibung verursacht wird, andererseits wird es möglich die Temperatur bei der Vermahlung in einen optimalen Bereich einzustellen. Für eine solche Einstellung kann eine Regelung für die Kühlmediumstemperatur und Durchflussgeschwindigkeit vorgesehen sein.

Das Material von Behälter, Rührwerkzeugen, Mahlblatt und Mahlkörpern ist bevorzugt rostfreier Edelstahl oder verschleissfester Stahl, um einerseits die erforderliche mechanische Festigkeit, andererseits aber auch die Lebensmittelkompatibilität zu gewährleisten. Möglich ist auch ein härtbarer Stahl, der beim Härten ein wenig seiner rostfreien Eigenschaften verliert. Auch die Reinigungsmöglichkeit muss materialbedingt gegeben sein. Denkbar im Rahmen der vorliegenden Erfindung, insbesondere für die Mahlkörper, ist auch ein keramischer Werkstoff oder metallische Werkstoffe, insbesondere Hartmetall. Dies würde den Verschleiss an den Mahlkörpern verringern und die Lebensdauer und Betriebsdauer der Mühle erhöhen.

Die Erfindung umfasst des Weiteren ein Verfahren zum Mahlen von Mahl- und Mischgut mit einer erfindungsgemässen Vorrichtung umfassend die folgenden Schritte:
Das Mahl- und Mischgut wird durch eine Einlassöffnung in einen Behälter eingelassen. Daraufhin wird es durch einen drehbar gelagerten Rührkörper mit stiftförmigen und scheiben- oder teilscheibenförmigen Rührwerkzeugen, statischen Mahlblättern sowie frei im Behältergelagerten Mahlkörpern gemahlen. Die Vermischung und Vermahlung wird durch den Einsatz von statische Mahlblättern und stiftförmigen sowie scheiben- oder teilscheibenförmigen Rührwerkzeugen verbessert.

Nach der Vermahlung wird das gemahlene Produkt durch eine Auslassöffnung den weiteren Verarbeitungsschritten zugeführt oder wieder zur Einlassöffnung geführt, um den Vorgang zu wiederholen.

Bevorzugt wird der Produktfluss während des Vermahlens an der Behälterinnenwand durch statische Mahlblätter geleitet. Es wird ein Förderflusses in oder entgegen der Produktflussrichtung durch die Anordnung von Mahlblättern und/oder Rührblättern in einer gewundenen Linie erzeugt, so dass die Scherbeanspruchung auf das Mahlgut erhöht wird und damit eine schnellere Bearbeitung möglich ist.

Des Weiteren ist ein Innenmantel für den Mahlbehälter einer oben beschriebenen Rührwerksmühle vorgesehen, wobei die Behälterinnenwand austauschbar gestaltet ist und insbesondere der Innenmantel lösbar am Aussenmantel befestigbar ist. Der Innenmantel ist bevorzugt lösbar am Aussenmantel befestigbar, insbesondere verschraubt, geklemmt und/oder angeflanscht. Der Innenmantel in einer Rührwerkskugelmühle ist einerseits zur Reinigung und andererseits aufgrund des Verschleisses eher auszutauschen als die anderen Teile der Rührwerkskugelmühle. Um die Produktivität zu erhöhen, wird daher ein Innenmantel vorgeschlagen, der lösbar am Aussenmantel befestigbar ist, so dass ein Austausch leicht und schnell möglich ist.

Die Erfindung wird nachfolgend in Ausführungsbeispielen anhand von Zeichnungen näher erläutert.

Es zeigen
- Figur 1: eine schematische Schnittdarstellung eines ersten Beispiels für eine Rührwerksmühle;
- Figur 2: eine schematische Schnittdarstellung eines zweiten Beispiels für eine Rührwerksmühle.

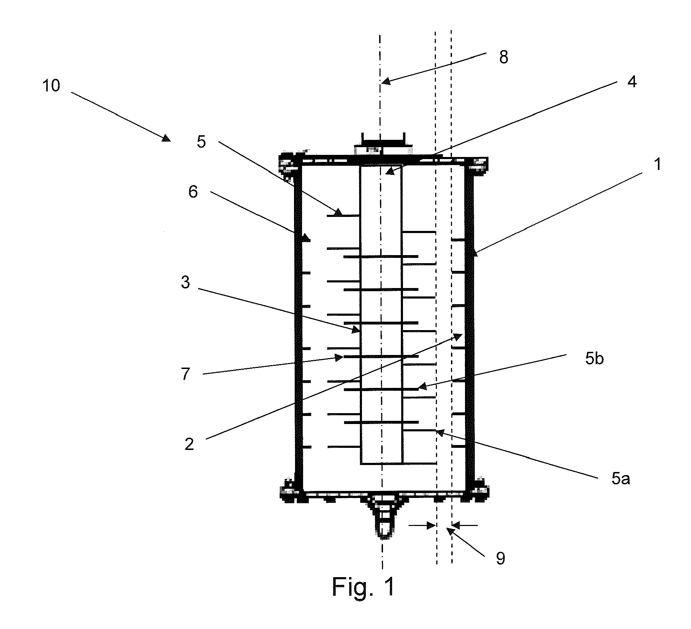

Figur 1 zeigt eine erste erfindungsgemässe Ausführungsform einer Rührwerksmühle 10 für die Schokoladenherstellung. In einem Behälter 1, der im Wesentlichen zylindrisch ausgestaltet ist, mit einer Behälterinnenwand 2 ist ein drehbar gelagerter Rührkörper 3 angeordnet, der eine Welle 4 umfasst. Die Welle 4 weist insbesondere im Wesentlichen radial von der Welle 4 wegweisende Rührwerkzeuge 5 auf. Die Rührwerkzeuge 5 sind stiftförmig 5a und scheibenförmig 5b ausgestaltet.

In dem Behälter 1 befinden sich weiterhin Mahlkörper, bevorzugt Kugeln, insbesondere Stahlkugeln, die in der Figur nicht explizit gezeigt sind. Die Mahlkörper sind im Behälter frei gelagert. Die Mahlkörper haben einen Durchmesser von im Wesentlichen 2-12 mm, bevorzugt im Wesentlichen 4-9 mm, insbesondere bevorzugt im Wesentlichen 6 mm. Beispielsweise wird für die Kakaoherstellung ein Kugeldurchmesser von 6,35mm verwendet, für Fettmassen bzw. Schokolade ein Kugeldurchmesser von 8 mm.

An der Behälterinnenwand 2 sind konzentrisch zu der Welle 4 des Rührkörpers 5 statische Mahlblätter 6 angeordnet. Die statischen Mahlblätter 6 sind ringförmig ausgeführt und konzentrisch zur Welle 4 des Rührkörpers 3 angeordnet. Die Rührwerkzeuge 5 und das mindestens eine Mahlblatt 6 sind in einer Projektion entlang der Wellenachse 8 durch Abstand 9 radial beabstandet. Am Rührkörper 3 befinden sich scheibenförmige Rührwerkzeuge 7.

Rührblätter 7 und Mahlblätter 6 sind lösbar befestigt, können aber alternativ auch unlösbar befestig sein. Die Beabstandung der Rührwerkzeuge 5 von den Mahlblättern 6 ermöglicht die Herausnahme des Rührkörpers entlang der Wellenachse 8 aus dem Behälter trotz unlösbar befestigter Mahlblätter 6.

Das Mahl- und Mischgut wird durch eine Einlassöffnung in den Behälter 1 eingelassen. Daraufhin wird es durch den drehbar gelagerten Rührkörper 3 mit Rührwerkzeugen 5a, 5b sowie frei im Behälter gelagerten Mahlkörpern gemahlen, während der Produktfluss an der Behälterinnenwand 2 durch statische Mahlblätter 6 geleitet wird. Die Flussrichtung des Mahlguts verläuft entgegen der Schwerkraft.

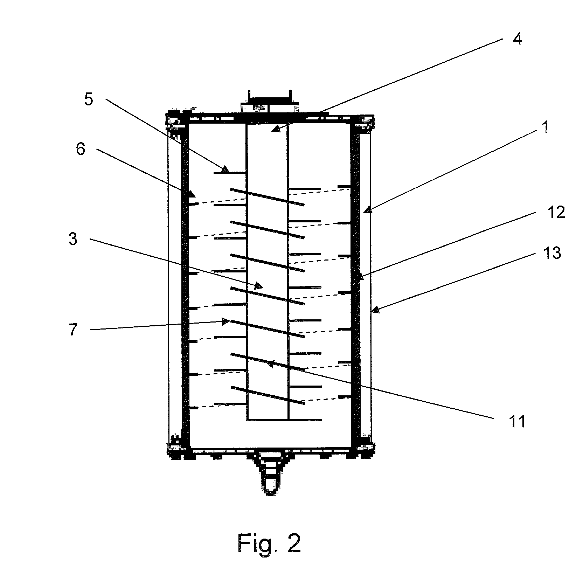

Figur 2 zeigt eine zweite Ausführungsform in der das statische Mahlblatt 6 sowie das scheibenförmige Rührwerkzeug 5b gewunden auf einer Linie 11 verlaufen. Es wird dadurch ein Förderfluss erzeugt, der abhängig von der Drehrichtung der Welle in Produktflussrichtung oder entgegen der Produktflussrichtung verläuft. Die gewunden verlaufende Ausbildung der statischen Mahlblätter verhindert einen direkten Förderfluss entlang der Behälterinnenwand 2. Der Weg des zu vermahlenden Produktes wird verlängert und dadurch der Kontakt mit den Mahlkörpern, die sich im Behälter befinden erhöht. Des Weiteren erhöht sich die Aufenthaltsdauer des Mahl- und Mischguts im Mahlprozess. Je länger der Kontakt mit den Mahlkörpern dauert und je grösser der Kontaktbereich, desto mehr Scherbeanspruchung wirkt auf das zu vermahlende Produkt und desto besser ist die Mahlleistung. Eine gewundene Ausgestaltung der Mahlblätter 6 erlaubt trotz allem einen Förderfluss, so dass das zu vermahlende Produkt in Bewegung bleibt und Scherbeanspruchungen provoziert werden. In dieser Ausführungsform ist der Behälter 1 doppelwandig mit Innenmantel 12 und Aussenmantel 13 ausgestaltet. Der Innenmantel 12 kann unabhängig von Aussenmantel 13 entfernt und/oder ersetzt werden. Diese doppelwandige Ausgestaltung erlaubt die Einleitung einer nicht explizit gezeigten Temperierflüssigkeit. Die Temperierflüssigkeit kann zur Erwärmung oder zur Kühlung verwendet werden. Durch die hohe Reibung zwischen den Mahlkörpern, der Behälterinnenwand 2, den Mahlblättern 6, den Rührwerkzeugen 5, den Rührblättern 7 und dem Produkt ist ein Wärmeeintrag prozessimmanent vorhanden, weshalb die doppelwandige Ausgestaltung des Behälters 1 und die damit gegebene Temperiermöglichkeit bevorzugt zur Kühlung eingesetzt wird.

## Patentansprüche

1. Rührwerksmühle (10) für den Lebensmittelbereich mit einem im wesentlichen zylindrischen oder konischen Behälter (1) mit einer Behälterinnenwand (2), einem drehbar gelagerten Rührkörper (3), umfassend eine Welle (4) und, insbesondere im wesentlichen radial von der Welle (4) wegweisende, stiftförmige Rührwerkzeuge (5a) und mindestens einem statischen Mahlblatt (6) an der Behälterinnenwand, **dadurch gekennzeichnet, dass** zusätzlich scheiben- oder teilscheibenförmige Rührwerkzeug (5b) an dem Rührkörper ausgebildet sind, welche eine Produktführungsfunktion übernehmen, in dem der Produktfluss entlang der Behälterinnenwand sowie direkt entlang der Wellenachse verhindert wird, so dass das zu vermahlende Produkt gegen die Rührwerkzeuge gelenkt wird.

2. Rührwerksmühle nach Anspruch 1, **dadurch gekennzeichnet, dass** das mindestens eine statische Mahlblatt (6) und die Rührwerkzeuge (5a, 5b) in einer Projektion entlang der Wellenachse (8) radial beabstandet sind.

3. Rührwerksmühle nach Anspruch 1 oder 2, **dadurch gekennzeichnet, dass** innerhalb des Behälters Mahlkörper, insbesondere Kugeln, vorgesehen sind.

4. Rührwerksmühle nach wenigstens einem der Ansprüche 1-3,
**dadurch gekennzeichnet, dass** das mindestens eine statische Mahlblatt mindestens im Wesentlichen axial von den scheibenförmigen Rührwerkzeugen beabstandet ist.

5. Rührwerksmühle (10) gemäss wenigstens einem der Ansprüche 3-4, **dadurch gekennzeichnet, dass** der radiale Abstand das 1-10-fache des grössten Durchmessers des grössten Mahlkörpers ist.

6. Rührwerksmühle (10) gemäss wenigstens einem der Ansprüche 1-5, **dadurch gekennzeichnet, dass** das mindestens eine statische Mahlblatt (6) auf einer gewunden verlaufenden, insbesondere schraubenförmigen oder spiralförmigen Linie (11) angeordnet ist.

7. Rührwerksmühle (10) gemäss wenigstens einem der Ansprüche 1 -6, **dadurch gekennzeichnet, dass** der Umfang des mindestens einem scheibenförmigen Rührwerkzeug eine von der Kreisform abweichende Form aufweist.

8. Rührwerksmühle (10) gemäss einem der vorhergehenden Ansprüche, **dadurch gekennzeichnet, dass** die Rührwerkzeuge (5a, 5b) auswechselbar an der Welle befestigt sind, insbesondere auf einer Manschette angeordnet sind.

9. Rührwerksmühle (10) gemäss einem der vorhergehenden Ansprüche, **dadurch gekennzeichnet, dass** die Rührwerkzeuge (5a, 5b) lösbar befestigt sind.

10. Rührwerksmühle (10) gemäss einem der vorhergehenden Ansprüche, **dadurch gekennzeichnet, dass** die Mahlblätter (6) lösbar an der Behälterinnenwand (2) befestigt sind.

11. Rührwerksmühle (10) gemäss einem der vorhergehenden Ansprüche, **dadurch gekennzeichnet, dass** der Behälter (1) doppelwandig ausgestaltet ist.

12. Rührwerksmühle (10) insbesondere gemäss einem der Ansprüche 1-11 **dadurch gekennzeichnet, dass** die Behälterinnenwand (2) unabhängig vom Aussenmantel entschalbar und/oder austauschbar ist.

13. Rührwerksmühle (10) gemäss einem der vorhergehenden Ansprüche, **dadurch gekennzeichnet, dass** der Behälter (1) temperierbar ist.

14. Verfahren zum Mahlen von Mahl- und Mischgut, in einer Rührwerksmühle (10) nach einem der Ansprüche 1-13, in einem Behälter umfassend die folgenden Schritte
- Einfüllen des Mahl- und Mischguts durch eine Einlassöffnung ein einen Behälter
- Mahlen des Mahl- und Mischguts durch einen drehbar gelagerten Rührkörper mit Rührwerkzeugen, sowie frei im Behälter gelagerten Mahlkörpern und statischen Mahlblättern an der Behälterinnenwand
- Auslass des gemahlenen Guts durch eine Auslassöffnung.

## Claims

1. Agitator mill (10) for the food sector, comprising a substantially cylindrical or conical container (1) having a container inner wall (2), a rotatably mounted agitator element (3), which latter comprises a shaft (4) and pin-shaped agitator tools (5a) which point, in particular, substantially radially away from the shaft (4), and having at least one static grinding blade (6) on the container inner wall, **characterized in that** disk-shaped or partially disk-shaped agitator tools (5b) are additionally configured on the agitator element, which disk-shaped or partially disk-shaped agitator tools assume a product guide function **in that** the product flow along the container inner wall, as well as directly along the shaft axis, is prevented, so that the product to be ground is directed toward the agitator tools.

2. Agitator mill according to Claim 1, **characterized in that** the at least one static grinding blade (6) and the agitator tools (5a, 5b) are radially spaced apart in a projection along the shaft axis (8).

3. Agitator mill according to Claim 1 or 2, **characterized in that** grinding elements, in particular balls, are provided within the container.

4. Agitator mill according to at least one of Claims 1-3, **characterized in that** the at least one static grinding blade is at least substantially axially distanced from the disk-shaped agitator tools.

5. Agitator mill (10) according to at least one of Claims 3-4, **characterized in that** the radial distance is 1-10 times the largest diameter of the largest grinding element.

6. Agitator mill (10) according to at least one of Claims 1-5, **characterized in that** the at least one static grinding blade (6) is disposed on a wavily running, in particular helical or spiral line (11).

7. Agitator mill (10) according to at least one of Claims 1-6, **characterized in that** the periphery of the at least one disk-shaped agitator tool has a shape which deviates from the circular shape.

8. Agitator mill (10) according to one of the preceding claims, **characterized in that** the agitator tools (5a, 5b) are exchangeably fastened to the shaft, in particular are disposed on a collar.

9. Agitator mill (10) according to one of the preceding claims, **characterized in that** the agitator tools (5a, 5b) are detachably fastened.

10. Agitator mill (10) according to one of the preceding claims, **characterized in that** the grinding blades (6) are detachably fastened to the container inner wall (2).

11. Agitator mill (10) according to one of the preceding claims, **characterized in that** the container (1) is of double-walled design.

12. Agitator mill (10), in particular according to one of Claims 1-11, **characterized in that** the container inner wall (2) can be independently stripped from the outer casing and/or exchanged.

13. Agitator mill (10) according to one of the preceding claims, **characterized in that** the container (1) is temperature controllable.

14. Method for milling grinding and mixing stock, in an agitator mill (10) according to one of Claims 1-13, in a container, comprising the following steps:
- Feeding of the grinding and mixing stock through an inlet opening into a container
- Grinding of the grinding and mixing stock by a rotatably mounted agitator element comprising agitator tools, as well as grinding elements freely mounted in the container and static grinding blades on the container inner wall
- Discharge of the ground stock through an outlet opening.

## Revendications

1. Broyeur agitateur (10) pour le secteur alimentaire, comprenant un récipient (1) essentiellement cylindrique ou conique avec une paroi interne de récipient (2), un corps d'agitateur (3) monté à rotation, comprenant un arbre (4) et des outils agitateurs en forme de tiges (5a), en particulier détournés essentiellement radialement de l'arbre (4), et au moins une pale de broyage statique (6) au niveau de la paroi interne de récipient, **caractérisé en ce que** des outils agitateurs (5b) en forme de disque ou de disque partiel sont en outre réalisés sur le corps d'agitateur, lesquels assurent une fonction de guidage de produit, le flux de produit étant empêché le long de la paroi interne du récipient ainsi que directement le long de l'axe de l'arbre, de sorte que le produit à broyer soit dévié vers les outils agitateurs.

2. Broyeur agitateur selon la revendication 1, **caractérisé en ce que** l'au moins une pale de broyage statique (6) et les outils agitateurs (5a, 5b) sont espacés radialement en projection le long de l'axe de l'arbre (8).

3. Broyeur agitateur selon la revendication 1 ou 2, **caractérisé en ce qu'**à l'intérieur du récipient sont prévus des corps de broyage, en particulier des billes.

4. Broyeur agitateur selon au moins l'une quelconque des revendications 1 à 3, **caractérisé en ce que** l'au moins une pale de broyage statique est espacée des outils agitateurs en forme de disque au moins essentiellement axialement.

5. Broyeur agitateur (10) selon au moins l'une quelconque des revendications 3 et 4, **caractérisé en ce que** la distance radiale mesure 1 à 10 fois le plus grand diamètre du plus grand corps de broyage.

6. Broyeur agitateur (10) selon au moins l'une quelconque des revendications 1 à 5, **caractérisé en ce que** l'au moins une pale de broyage statique (6) est disposée sur une ligne (11) s'étendant sous forme enroulée, en particulier sous forme hélicoïdale ou en spirale.

7. Broyeur agitateur (10) selon au moins l'une quelconque des revendications 1 à 6, **caractérisé en ce que** la périphérie de l'au moins un outil agitateur en forme de disque présente une forme s'écartant de la forme circulaire.

8. Broyeur agitateur (10) selon l'une quelconque des revendications précédentes, **caractérisé en ce que** les outils agitateurs (5a, 5b) sont fixés de manière remplaçable sur l'arbre, en particulier sont disposés sur une manchette.

9. Broyeur agitateur (10) selon l'une quelconque des revendications précédentes, **caractérisé en ce que** les outils agitateurs (5a, 5b) sont fixés de manière détachable.

10. Broyeur agitateur (10) selon l'une quelconque des revendications précédentes, **caractérisé en ce que** les pales de broyage (6) sont fixées de manière détachable sur la paroi interne de récipient (2).

11. Broyeur agitateur (10) selon l'une quelconque des revendications précédentes, **caractérisé en ce que** le récipient (1) présente une configuration à paroi double.

12. Broyeur agitateur (10) notamment selon l'une quelconque des revendications 1 à 11, **caractérisé en ce que** la paroi interne de récipient (2) peut être décoffrée et/ou remplacée indépendamment de l'enveloppe extérieure.

13. Broyeur agitateur (10) selon l'une quelconque des revendications précédentes, **caractérisé en ce que** le récipient (1) peut être régulé en température.

14. Procédé de broyage de produit à broyer et mélanger, dans un broyeur agitateur (10) selon l'une quelconque des revendications 1 à 13, dans un récipient, comprenant les étapes suivantes :
- introduction du produit à broyer et mélanger à travers une ouverture d'entrée dans un récipient,
- broyage du produit à broyer et mélanger par un corps d'agitateur monté à rotation avec des outils agitateurs, ainsi que par des corps de broyage montés librement dans le récipient et des pales de broyage statiques au niveau de la paroi interne de récipient,
- évacuation du produit broyé à travers une ouverture d'évacuation.
